**Europäisches Patentamt**

**European Patent Office**

**Office européen des brevets**

(11) Veröffentlichungsnummer: **0 449 102 A1**

## (12) EUROPÄISCHE PATENTANMELDUNG

(21) Anmeldenummer: 91104390.9

(22) Anmeldetag: 21.03.91

(51) Int. Cl.5: **C09D 5/24**, C09D 167/00, C09D 127/08

(30) Priorität: 30.03.90 DE 4010247

(43) Veröffentlichungstag der Anmeldung:
02.10.91 Patentblatt 91/40

(84) Benannte Vertragsstaaten:
AT BE CH DE DK ES FR GB GR IT LI LU NL SE

(71) Anmelder: **HOECHST AKTIENGESELLSCHAFT**
**Postfach 80 03 20**
**W-6230 Frankfurt am Main 80(DE)**

(72) Erfinder: **Hilger, Manfred**
**Langenbergring 74**
**W-5593 Konz(DE)**
Erfinder: **Wallwitz, Ulrich, Dr. Dipl.-Chem.**
**Alte Poststrasse 83**
**W-5501 Kenn(DE)**
Erfinder: **Rösner, Reiner**
**Auf der Kenner Ley 42**
**W-5501 Kenn(DE)**
Erfinder: **Reh, Thomas**
**Aacherweg 50**
**W-5500 Trier(DE)**

(54) **Überzugsmasse.**

(57) Die Erfindung betrifft eine Überzugsmasse zur Verwendung auf mindestens einer Oberfläche einer Kunststoffolie, insbesondere auf einer Polyesterfolie, die aus einer Mischung eines Mischpolyesters mit einem Mischpolymerisat des Vinylidenchlorids und einem mit der Mischung verträglichen Antistatikum in einem Gewichtsverhältnis von Mischung zu Antistatikum im Bereich von etwa (2,5-1,5):1 vorzugsweise etwa 2:1 besteht. Die Mischung kann zusätzlich 0,2-5 Gewichtsprozent, bezogen auf Feststoff, Schlupfmittel enthalten.
Besondere Anwendung findet die Überzugsmasse bei der Herstellung von Mikrofilmen.

EP 0 449 102 A1

Die vorliegende Erfindung betrifft eine antistatisch ausgerüstete Überzugsmasse zur Verwendung auf mindestens einer Oberfläche einer Kunststoffolie, insbesondere auf einer Polyesterfolie.

Folien aus Kunststoffen sind bekannt und haben neben ihrem hohen Gebrauchswert den Nachteil, daß sie elektrostatisch unerwünscht stark aufladbar sind. Es sind Folien bekannt, denen man zur Verhinderung dieser Eigenschaft ein Antistatikum in Masse eingearbeitet hat oder bei denen eine dünne Schicht aus einem Antistatikum auf die Oberfläche aufgetragen wird. Bei Folien mit antistatischer Ausrüstung in der Masse ist entweder der erreichbare antistatische Effekt gering oder aber, bei höherem Zusatz von Antistatikum verschlechtern sich deutlich die mechanischen Eigenschaften der Folien. Das Auftragen einer antistatischen Schicht führt zu besseren Effekten. Bei den Antistatika handelt es sich meistens um in Wasser lösliche niedermolekulare oder polymere Produkte. Hierdurch sind jedoch der Beständigkeit der Schicht gegen Feuchtigkeit bzw. Wasser Grenzen gesetzt. Außerdem lassen sich diese Schichten mechanisch leicht abreiben und verlieren damit ihre Wirkung.

Kombiniert man dagegen herkömmliche Antistatika mit Bindemitteln, so erhält man zwar eine gegen mechanische Einwirkung beständigere, entsprechend geringere antistatische Wirkung, aber nach der Einwirkung von Wasser geht auch diese allmählich verloren.

Es wurde erkannt, daß antistatisch ausgerüstete Kunststoffolien, die auf einer ihrer Oberflächen eine funktionelle Beschichtung tragen, im aufgerollten Zustand nach längerer Lagerung ihre antistatische Wirkung verlieren, auch wenn sie rückseitig mit einem antistatischen Rückstrich versehen worden waren. Vermutlich geht im Aufrollstadium in Verbindung mit den in der funktionellen Schicht enthaltenen Stoffen, wie beispielsweise Celluloseestern, ihre antistatische Wirkung verloren. Weiterhin besitzt die Schicht eine zu geringe Wischfestigkeit und eine mangelnde Haftung, was zu dem beschleunigten Abbau der Wirkung beiträgt.

Ein Nachteil der bekannten Antistatiklösungen ist auch ihre schlechte Filmbildung auf der Kunststoffolie. Man trägt im allgemeinen die Lösung aus einem Wasser-Alkohol-Gemisch rückseitig auf. Beim anschließenden Trocknungsprozeß zeigen sich Entnetzungsmerkmale, die sich oftmals in einer geringeren Funktionsweise der Antistatikschicht widerspiegeln.

Der Versuch, beispielsweise eine Polyesterfolie mit antistatischer Ausrüstung zu beziehen und als Basismaterial einzusetzen, scheitert meist entweder an einer zu hohen Eigenklebrigkeit der Polyesterfolienlagen untereinander oder an mangelnder Haftung von rückseitig anzubringenden Zusatzschichten.

Aus all diesen negativen Erkenntnissen ergab es sich, eine Antistatikschicht zu entwickeln, die eine hohe Beständigkeit und dauerhafte Wirksamkeit aufweist und gleichzeitig die notwendige Abriebfestigkeit besitzt, wobei die Haftung gegenüber der Basisfolie gut sein muß. Auch ist es wichtig, daß bei den nachträglich rückseitig anzubringenden Zusatzschichten, wie z.B. Titeldruckfarbenleisten, ein ausreichender Verbund zur Antistatikschicht vorhanden ist.

Antistatische Überzüge auf Polyesteroberflächen sind bekannt. Sie können (DE-A- 36 29 930) aus einer Mischung von Celluloseestern oder von Poly(meth)acrylaten bzw. deren Mischpolymerisaten und einem Antistatikum bestehen, die zusätzlich mit der Mischung verträgliche Weichmacher, Vinylpolymere oder Polyester im Gewichtsverhältnis zwischen 1:1 und 1:15, bezogen auf Antistatikum zu Zusatz enthalten. Auch sind Mischungen aus Polyacrylaten und Antistatikum aus EP-B 0 027 699, entsprechend US-A 4,371,489, EP-B 0 013 556 entsprechend US-A 4,214,035 oder DE-A 29 50 287 entsprechend US-A 4,225,665 bekannt.

Man stellt generell antistatische Schichten aus Acrylat-Dispersionen her, die, weil aus wäßrigen Dispersion aufgetragen, leichter antistatisch auszurüsten sind, aber zu ihrer Verfestigung vernetzt werden müssen.

Es ist auch eine Haftmasse zur Verwendung auf Polyesterformteilen bekannt (EP-B 0 124 094, entsprechend US-A 4 576 981), die aus Mischpolyestern und Celluloseacylestern, gegebenenfalls im Gemisch mit lichtempfindlichen Substanzen, Füllstoffen und Pigmenten besteht und zusätzlich ein Mischpolymerisat des Vinylidenchlorids im Gewichtsverhältnis im Bereich von (3 bis I):1, bezogen auf das Gesamtgemisch, enthält. Die Haftmasse weist eine gute Haftfähigkeit auf dem Substrat auf, das jedoch als Schichtträger für z.B. Diazomaterialien oder zur Herstellung von Zeichenschichten, noch nicht auf eine antistatische Wirkungsweise abgestimmt ist.

Es war deshalb Aufgabe der Erfindung Kunststoffolien, insbesondere Polyesterfolien mit antistatisch ausgerüsteter Oberfläche zur Verfügung zu stellen, die bei einer langzeitig antistatischen Wirkung eine hohe Beständigkeit gegen Feuchtigkeit und Wasserangriff besitzen und bei mechanischem Angriff, zum Beispiel beim Aufwickeln, ihre anwendungstechnischen Eigenschaften in hohem Maße behalten.

Die Aufgabe wurde gelöst durch eine Überzugsmasse zur Verwendung auf mindestens einer Oberfläche einer Kunststoffolie, insbesondere auf einer Polyesterfolie, die dadurch gekennzeichnet ist, daß sie aus einer Mischung eines Mischpolyesters mit einem Mischpolymerisat des Vinylidenchlorids und einem mit der Mischung verträglichen Antistatikum im Gewichtsverhältnis von Mischung zu Antistatikum im Bereich von etwa (2,5 bis 1,5) :1 besteht. Vorzugsweise beträgt das Gewichtsverhältnis etwa 2:1.

Der erfindungsgemäßen Überzugsmasse kann vorzugsweise Schlupfmittel in einem Anteil von etwa 0,2 bis 5 Gewichtsprozent, bezogen auf Feststoff, zugefügt werden.

Als Mischpolyester dienen insbesondere lineare Polyester aus Iso- und Terephthalsäure mit einem oder mehreren Glykolen, vorzugsweise mit einem Molekulargewicht von etwa 20.000.

Als Mischpolyester des Vinylidenchlorids kommen Copolymerisate mit Acrylnitril, vorzugsweise mit einem Molekulargewicht im Bereich von 10.000 bis 20.000 in Frage. Das Mischpolymerisat enthält vorzugsweise Vinylidenchlorid und Acrylnitril im Gewichtsverhältnis von 80:20.

Um das Blocken beim Wickeln der Kunststoffolie zu verhindern oder um die Verklebungsneigung bei Wärme zu reduzieren enthält die erfindungsgemäße Überzugsmasse vorzugsweise Schlupfmittel, wie anorganische Pigmente, zum Beispiel Siliciumdioxide, die über die Hydrolyse von Silanverbindungen hergestellt sind und keine Eigentrübung besitzen, ferner auch Silikate, Calcium-oxide oder -carbonate.

Das Schlupfmittel ist vorzugsweise in einem Anteil von 0,5 bis 1 Gewichtsprozent, bezogen auf Feststoff, vorhanden.

Die erfindungsgemäße Überzugsmasse in Form der antistatischen Beschichtung besitzt eine hohe Beständigkeit und dauerhafte Wirksamkeit gegenüber Mischungen, die Celluloseester aufweisen, und besitzt gleichzeitig die notwendige Abriebfestigkeit, wobei die Haftungseigenschaft gegenüber der Kunststoffolie sich als sehr gut erweist. Auch bei nachträglich rückseitig aufzubringender Kennzeichnungen, wie Titelleisten, bildet die Druckfarbe einen technisch ausreichenden Verbund mit der Schicht.

Die erfindungsgemäße Überzugsmasse verbessert die anwendungstechnischen Eigenschaften der Polyesterfolien im Hinblick auf weitere Verarbeitungsschritte deutlich. So werden auch die Wickeleigenschaften der Folie optimiert und darüber hinaus erweist sich die transparente Überzugsmasse als äußerst wischfest.

Diese Eigenschaften führen zu qualitativ hochwertig veredelten Kunststoffolien als Basismaterialien, die besonders für anspruchsvolle anwendungstechnische Verarbeitungsgebiete geeignet sind.

Die antistatische Ausrüstung ermöglicht es, produktionstechnische Probleme bei der Herstellung von Diazo-Duplizierfilmen zu lösen, wobei bisher folgende Schwierigkeiten bestanden: Das bekannte Rohfolienmaterial in Rollenform zeigte ohne Wickelhilfsmittel Verprägungen und schlechte Schlupfeigenschaften innerhalb der einzelnen Folienlagen, was mit unterschiedlichsten Wickelhilfsmitteln zwar behoben werden konnte, aber sie zeigten eine zum Teil sehr schlechte Verträglichkeit mit der lichtempfindlichen Schicht und dem Antistatikum. Bei der Verarbeitung mit Wickelhilfsmitteln entstanden zudem Störungen durch Abrieb von der Polyesterfolie an den Verarbeitungsmaschinen, was von mangelhafter Haftung des Rückseitenstriches herrührte.

Bekannte antistatische Nachbehandlungsschichten im Verbund, zum Beispiel in Rollenform, zeigten beim Diazo-Mikrofilm nach einer Lagerzeit von einigen Monaten auch eine deutliche Abnahme ihrer Wirkungsweise. Ein weiterer Nachteil der bekannten antistatisch wirkenden Nachbehandlungsschichten war ihre schlechte Filmbildung auf der Basisfolie. Die Schicht zeigte beim Trocknungsprozeß Entnetzungsmerkmale, die sich oftmals durch eine mangelhafte Wirkungsweise der Antistatikschicht äußerten. Außerdem waren die Bestandteile der Lösung in ihrer Haltbarkeit untereinander äußerst instabil.

Mit Hilfe von Cellulosemischestern, Celluloseestern, Novolaken u.s.w. in Verbindung mit unterschiedlichem Antistatikum wurden zahlreiche Versuche durchgeführt. Die Versuche scheiterten entweder an mangelnder Haftung, zu geringer Wischfestigkeit, schlechter Filmbildung, Unverträglichkeit der Komponenten innerhalb der Schicht oder an absoluter Wirkungslosigkeit der Antistatik. Besonders in Verbindung mit Celluloseestern baute sich die antistatische Wirkungsweise innerhalb kurzer Zeit ab.

Völlig überraschend führte die erfindungsgemäße Kombination von Mischpolyester und Mischpolymerisat des Vinylidenchlorids mit einem Antistatikum in einem organischen Lösungsmittel zu einem guten Ergebnis. Eine Lösung in Methylethylketon, mit einem Bindemittel-Antistatikum-Verhältnis von etwa 2:1, führte zu einer transparenten Lackschicht, die sämtliche gewünschten Eigenschaften wie Wischfestigkeit, Transparenz und antistatische Wirksamkeit der Schicht und Haftung und Benetzbarkeit gegenüber der Basisfolie in sich vereinigte. Selbst bei äußerst starker Kontaktierung in Verbindung mit Celluloselackschichten konnte keine Beeinträchtigung der antistatischen Wirkungsweise festgestellt werden. Hinzu kamen hervorragende Haftungseigenschaften gegenüber der Polyesterbasisfolie und dem Kennzeichnungsdruck. Lagertests im Kontakt mit Celluloseesterlackschichten (Diazo-Duplizierfilm) zeigten über einen Zeitraum von etwa 3 Monaten selbst bei extremen Außenbedingungen (Hot-Box-Test) keine signifikante Abnahme der antistatischen Wirkung.

Die Dicke der getrockneten Schicht aus der erfindungsgemäßen Überzugsmasse beträgt, auf das Schichtgewicht bezogen, etwa 0,05 bis 1,0, vorzugsweise etwa 0,1 bis 0,3 g/m².

Als Mischpolyester werden Polyesterharze eingesetzt, die Mischpolyester aus zum Beispiel Iso- und Terephthalsäure und einem oder mehreren Glykolen darstellen und die unter dem Namen Dynapol[R] der DYNAMIT NOBEL oder Vitel[R] der GOODYEAR im Handel erhältlich sind. Sie stellen lineare Polyester dar mit Molekulargewichten bis etwa 20.000, aus Diolen mit 2 bis 8 Kohlenstoffatomen und Dicarbonsäuren mit 4 bis 12 Kohlenstoffatomen. Hierzu gehören Ethylenglykol, Diethylenglykol, Propylenglykol, Butylenglykol, Neopentylglykol und Sebacinsäure, Azelainsäure, Pimelinsäure, Adipinsäure, Glutarsäure, Phthalsäure, Isophthalsäure, Terephthalsäure, alkylierte Phthalsäure. Sie werden allein oder in Mischung verwendet.

Als Mischpolymerisate des Vinylidenchlorids kommen die aus dem Handel unter dem Namen Saran[R] der DOW CHEMICAL bekannten in Frage, die zum Beispiel aus Vinylidenchlorid und Acrylnitril oder Vinylidenchlorid, Vinylchlorid und Acrylnitril in den verschiedensten Gewichtsverhältnissen zusammengesetzt sind, mit Molekulargewichten von 10.000 bis 20.000. Vorzugsweise wird ein Mischpolymerisat aus Vinylidenchlorid und Acrylnitril im Verhältnis 80:20 eingesetzt.

Als Antistatikum können handelsübliche Produkte Verwendung finden. Sie sind bei Zimmertemperatur flüssig oder fest. Für Überzüge mit großer Härte werden jedoch Antistatika in festem Zustand bevorzugt.

Als einsetzbare, handelsübliche Antistatika werden insbesondere quaternäre Ammoniumverbindungen wie Stearamidopropyldimethyl-ß-hydroxyethyl-ammoniumnitrat (CYASTAT[R] der CIBA GEIGY), Dodecyltrimethylammonium-chlorid, gelöst in wäßrigem Alkohol (ARQUAD[R] der ARMOUR HESS) und wäßrigalkoholische Lösungen von quaternären Ammoniumverbindungen (ANTISTATIKUM[R] der KRAHN CHEMIE) genannt.

Die angeführten Produkte sollen nur eine Auswahl aus der Reihe der einsetzbaren Antistatika darstellen.

Die erfindungsgemäßen Überzüge für Polyesteroberflächen können auch noch für andere Zwecke geeignete Substanzen enthalten, wie etwa Pigmente, Füllstoffe, dispergierende und vernetzende Chemikalien und haftvermittelnde Substanzen.

Als Basisträger dienen Kunststofffolien aus Polyvinylchlorid, Polycarbonat, Polystyrol, Polysulfon, Polyolefin oder aus Polyester bzw. Celluloseester, wie Acetatfolie. Wegen der hervorragenden Dimensionsstabilität, die in vielen Fällen von besonderer Wichtigkeit ist, werden vorzugsweise Folien auf Basis Polyester, wie etwa Polyethylenterephthalat, eingesetzt.

Erfindungsgemäß können beide oder nur eine Oberfläche der Kunststofffolie mit der antistatisch wirkenden Überzugsmasse versehen werden. Im Falle einer einseitigen Beschichtung kann die andere Seite auch eine andere funktionelle Schicht, wie etwa eine pigmentierte, gefärbte oder lichtempfindliche Schicht tragen.

Der Antrag kann mit Hilfe der herkömmlichen Antragssysteme und mit den unterschiedlichsten Beschichtungsgeschwindigkeiten erfolgen.

Die erfindungsgemäße Überzugsmasse wird vorzugsweise im IN-LINE-Verfahren bei gleichzeitiger Beschichtung mit einer beispielsweise lichtempfindlichen Schicht aufgetragen.

Es wurde festgestellt, daß vernetzende Isocyanatverbindungen und Celluloseester in der lichtempfindlichen Schicht im Kontakt mit der erfindungsgemäßen Überzugmasse keine negativen Auswirkungen auf ihre antistatische Wirkungsweise zeigen.

In weiterer Ausgestaltung der Erfindung kann die Überzugsmasse ein Verlaufmittel enthalten. Hierdurch wird eine noch bessere Vergleichmäßigung der Beschichtung erzielt. Als Verlaufmittel dienen die im Handel befindlichen, zum Beispiel die unter dem Namen Tegopren[R] der GOLDSCHMIDT AG, bekannten. Sie sind in organischen Lösungsmitteln, wie Alkoholen, aliphatischen und aromatischen Kohlenwasserstoffen, chlorierten Kohlenwasserstoffen, Ketonen oder Estern löslich. Es sind auch Produkte geeignet, die sowohl in Wasser als auch in organischen Lösungsmitteln löslich sind. Vorzugsweise kann ein in Wasser und organischem Lösungsmittel lösliches Polysiloxan verwendet werden, mit Viskositäten im Bereich von 800 ± 150 mPa·s bei 25 ° C.

Mit Hilfe eines Dyntest-Gerätes kann die Funktionsweise der Antistatikschicht überprüft werden. Die zu überprüfende Oberfläche wird mit Hilfe einer Korona aufgeladen und innerhalb eines festgelegten Zeitraumes entladen. Die Höhe der Aufladung, die Geschwindigkeit der Entladung und die verbleibende Restladung sind Kriterien zur Beurteilung der antistatischen Funktionsweise einer Schicht.

Die folgenden Versuche sollen die Erfindung näher erläutern ohne sie hierauf zu beschränken.

Auf einen Mikrofilm mit einer 125 μm dicken Polyesterbasisfolie wurde rückseitig folgende Beschichtungslösung aufgetragen:

0,581 g Mischpolyester (DYNAPOL L 206)

0,322 g Mischpolymerisat (SARAN F 310)

0,497 g quaternäre Ammoniumverbindung (CYASTAT)

0,020 g hydrophobes Siliciumdioxid (AEROSIL R 972)

4

98,579 g Methylethylketon (MEK)

Nach Trocknen hatte die Überzugsmasse ein Schichtgewicht von etwa 0,2 g/m$^2$.

Von dem hergestellten Material wurden Teststreifen von der Originalrolle mit Ausmaßen von 15 mm Breite und 60 mm Länge entnommen. Die Proben wurden in eine Aufnahmevorrichtung innerhalb des Dyntest-Gerätes eingebracht und mit Hilfe eines rotierenden Plattentellers über eine Koronaspannung auf 1500 V aufgeladen. Der Meßdurchlauf erfolgt über 8 Meßpunkte. Die ersten 3 Meßpunkte dienten zur Ermittlung der jeweiligen Aufladung und die verbleibenden 5 Meßpunkte erfassten die Entladung der Schicht. Das Ganze wurde in genau abgestimmten Zeitabständen durchgeführt. So betrug der Zeitraum der Aufladung der Oberfläche 20 sec, wobei die einzelnen Messungen nach 10, 15 und 20 sec erfolgten. Nach der erfolgten max. Aufladung wurde die Schichtentladung innerhalb von 20 sec vollzogen. Die Entladungscharakteristik wurde über 5 Meßpunkte 4, 8, 12, 16 und 20 sec ermittelt.

Der Durchschnittswert von 10 Proben eines Musters wurde der Beurteilung zugrunde gelegt. Die jeweiligen Einzelmessungen erfolgten bei 20 °C und 50 % relativer Luftfeuchtigkeit.

Die Messungen wurden a) direkt nach Erstellung der Folienmuster und b) nach einer Lagerung in Rollen von vier Monaten von geschnittenen Teststreifen durchgeführt.

Die Werte der Tabelle I zeigen für das erfindungsgemäß hergestellte Material, daß im Aufladungsbereich die maximale Aufladung gering ausfällt und über die Lagerzeit sich kaum signifikante Änderungen ergeben.

Im Vergleich wurden entsprechende Mikrofilmmuster mit einer rückseitig, mit Natronlauge neutralisierten wäßrigalkoholischen Beschichtungslösung aus einer Mischung von

| 1 Gewichtsteil (Gt) | n-Alkansulfonat (STATEXAN$^R$ BAYER AG) |
| 2 Gt | Alkylphenolethoxylat (LUTENSOL$^R$ BASF AG) |
| 2 Gt | eines Polyvinylalkoholderivats (AFILAN$^R$ HOECHST AG) |

mit einem Feststoff von 2,5 % in der Lösung versehen, getrocknet und der gleichen Messung unterworfen.

Dabei ergaben sich die in Tabelle II angegebenen Werte. Sie geben an, daß ein höherer Einstieg in die Aufladung erfolgte und daß im Langzeittest sich eine schlechtere Entladung ergab, wobei die erhöhte Restladung keine technische Verwertung des Materials zuließ.

Schließlich wurden zusätzlich entsprechende Vergleichsmessungen mit einem Mikrofilm auf Polyesterbasisfolie ohne rückseitige antistatische Beschichtung durchgeführt.

Die erhaltenen Werte sind in Tabelle III zusammengestellt und zeigen keine Veränderung der ursprünglichen Aufladung.

Folgende Werte wurden erhalten:

Tabelle I

| Zeitpunkt der Messung | max. Aufl.(V) nach (sec) 10 15 20 | max.Entl. (V) nach (sec) 4 8 12 16 20 |
|---|---|---|
| direkte Messung (V) | 335 331 282 | 14 12 13 14 13 |
| nach 4 Monaten (V) | 337 353 362 | 11 10 10 10 9 |

Tabelle II

| Zeitpunkt der Messung | max. Aufl. (V) nach (sec) 10 15 20 | max.Entl. (V) nach (sec) 4 8 12 16 20 |
|---|---|---|
| direkte Messung (V) | 966 794 945 | 306 138 70 37 21 |
| nach 4 Monaten (V) | 1290 1420 1310 | 1050 880 720 690 620 |

Tabelle III

| Zeitpunkt der Messung | max. Aufl.(V) nach (sec) 10 15 20 | max.Entl. (V) nach (sec) 4 8 12 16 20 |
|---|---|---|
| (V) | 1290 1300 1380 | 1380 1380 1380 1380 1380 |

In Abänderung der obigen Zusammensetzung der erfindungsgemäßen Überzugsmasse zeigten Versuche, daß das Antistatikum in Konzentrationen von 0,25 bis maximal 0,75 %, bezogen auf die Lösung zugefügt werden kann. Das Verhältnis Bindemittel (Mischpolyester und Mischpolymerisat) zu Antistatikum kann im Bereich von etwa 2:1 liegen, wobei die Bindemittelkonzentration um ein Vielfaches erhöht werden kann.

Auch der Schlupfmittelanteil kann, je nach Anwendungsbereich von 0,005 bis 0,05 %, bezogen auf die Beschichtungslösung, variieren.

Es hat sich als vorteilhaft erwiesen vor der Zugabe zur Lösung das Schlupfmittel im gleichen Lösungsmittel mit Hilfe einer Kugelmühle (Dynomühle) zu vermahlen bzw. anzuteigen.

Die Beschichtungslösungen wurden vorzugsweise mit einer Rasterwalze direkt angetragen.

**Patentansprüche**

1. Überzugsmasse zur Verwendung auf mindestens einer Oberfläche einer Kunststoffolie, insbesondere auf einer Polyesterfolie, dadurch gekennzeichnet, daß sie aus einer Mischung eines Mischpolyesters mit einem Mischpolymerisat des Vinylidenchlorids und einem mit der Mischung verträglichen Antistatikum in einem Gewichtsverhältnis von Mischung zu Antistatikum im Bereich von etwa (2,5-1,5):1 besteht.

2. Masse nach Anspruch 1, dadurch gekennzeichnet, daß das Gewichtsverhältnis von Mischung zu Antistatikum etwa 2:1 beträgt.

3. Masse nach Anspruch 1 oder 2, dadurch gekennzeichnet, daß sie zusätzlich ein Schlupfmittel in einem Anteil von etwa 0,2 bis 5 Gewichtsprozent, bezogen auf Feststoff enthält.

4. Masse nach Anspruch 1, dadurch gekennzeichnet, daß der Mischpolyester ein linearer Polyester aus Iso- und Terephthalsäure und einem oder mehreren Glykolen ist.

5. Masse nach Anspruch 1, dadurch gekennzeichnet, daß das Mischpolymerisat des Vinylidenchlorids ein Copolymer mit Acrylnitril ist.

6. Masse nach Anspruch 5, dadurch gekennzeichnet, daß das Mischpolymerisat Vinylidenchlorid und Acrylnitril im Gewichtsverhältnis 80 : 20 enthält.

7. Masse nach Anspruch 1, dadurch gekennzeichnet, daß das Antistatikum eine quaternäre Ammoniumverbindung ist.

8. Masse nach Anspruch 7, dadurch gekennzeichnet, daß das Antistatikum Stearamidopropyldimethyl-ß-hydroxyethylammoniumnitrat ist.

9. Masse nach Anspruch 1, dadurch gekennzeichnet, daß sie rückseitig auf einen Mikrofilm mit Polyethylenterephthalatfolienträger aufgebracht ist.

10. Masse nach Anspruch 1, dadurch gekennzeichnet, daß sie aus organischer Lösung auf das Polyesterformteil aufgebracht wurde.

## EINSCHLÄGIGE DOKUMENTE

EP 91104390.9

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | US - A - 4 592 961 (EHRREICH) * Ansprüche; Spalte 2, Zeile 24-30 * -- | 1 | C 09 D 5/24 C 09 D 167/00 C 09 D 127/08 |
| X | DATABASE WPIL, no. 90-095 222 DERWENT PUBLICATIONS LTD., London, GB * Abstract * & JP-A-02-46 799 (FUJI PHOTO FILM KK) 16-02-90 -- | 1 | |
| A | US - A - 4 711 816 (WITTNEBEL) * Claims * ---- | 1 | |

RECHERCHIERTE SACHGEBIETE (Int. Cl⁵)

C 09 D

Der vorliegende Recherchenbericht wurde für alle Patentansprüche erstellt.

| Recherchenort | Abschlußdatum der Recherche | Prüfer |
|---|---|---|
| WIEN | 12-06-1991 | PAMMINGER |